(19)

Europäisches Patentamt
European Patent Office
Office européen des brevets

(11) Veröffentlichungsnummer : **0 363 348 B1**

(12) # EUROPÄISCHE PATENTSCHRIFT

(45) Veröffentlichungstag der Patentschrift : **21.08.91 Patentblatt 91/34**

(51) Int. Cl.$^5$ : **B26F 1/38,** B26D 3/10

(21) Anmeldenummer : **89890239.0**

(22) Anmeldetag : **14.09.89**

(54) **Schneidanlage zum Ausschneiden von Zuschnitten aus bandförmigem Ausgangsmaterial, insbesondere Prepregs.**

(30) Priorität : **04.10.88 AT 2445/88**

(43) Veröffentlichungstag der Anmeldung : **11.04.90 Patentblatt 90/15**

(45) Bekanntmachung des Hinweises auf die Patenterteilung : **21.08.91 Patentblatt 91/34**

(84) Benannte Vertragsstaaten : **DE ES FR GB IT**

(56) Entgegenhaltungen : **DE-A- 3 341 651** **GB-A- 2 148 175**

(73) Patentinhaber : **GFM Gesellschaft für Fertigungstechnik und Maschinenbau Aktiengesellschaft**
**Ennserstrasse 14**
**A-4403 Steyr (AT)**

(72) Erfinder : **Blaimschein, Gottfried, Dipl.-Ing.**
**Arnhalmweg 33**
**A-4407 Steyr (AT)**
Erfinder : **Postier, Robert A.**
**4454 Feather River Road**
**Corona California 91720 (US)**
Erfinder : **Pilkington, D.J., M.Sc.**
**35 Hall Close**
**Kettering Northants NN157LQ (GB)**

(74) Vertreter : **Hübscher, Heiner, Dipl.-Ing. et al**
**Patentanwälte Dipl.-Ing. Gerhard Hübscher, Dipl.-Ing. Helmut Hübscher Dipl.-Ing. Heiner Hübscher Spittelwiese 7**
**A-4020 Linz (AT)**

**EP 0 363 348 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf eine Schneidanlage zum Ausschneiden von Zuschnitten aus bandförmigem Ausgangsmaterial, insbesondere von ein- oder beidseitig folienbedeckten Prepregs, mit einem eine unterdruckbeaufschlagbare Arbeitsfläche bildenden Schneidtisch, einem über die Arbeitsfläche verfahrbaren Schneidaggregat, das ein auf eine bestimmte Schnittiefe einstellbares Schneidwerkzeug, vorzugsweise ein mit Ultraschallfrequenz schwingendes Schneidmesser besitzt sowie einer dem Schneidtisch materialzufuhrseitig vorgelagerten Materialspenderrolle und einer dem Schneidtisch nachgeordneten Materialaufnahmerolle.

Unter Prepregs wird auf dem Gebiet der faserverstärkten Kunststoffe vorimprägniertes Faserwerk verstanden, das mit einem vorbestimmten Anteil Reaktionsharzmasse imprägniert und ohne weitere Zusätze unter Wärme ohne Druck härtbar ist. Aus diesem in aufrollbarer Bandform mit ein- oder beidseitiger Deckfolie vorgefertigten Ausgangsmaterial werden dann auf einer geeigneten Schneidanlage die gewünschten Zuschnitte nach einer auf das eigentliche Endprodukt abgestimmten Umrißlinie ausgeschnitten, wobei, um den Verschnitt gering zu halten, die einzelnen Zuschnitte ein möglichst eng aneinandergerücktes Schnittmuster, ein sogenanntes Nest, bilden. Um nun diese Zuschnitte auszuschneiden, wird bisher das Bandmaterial, das auf einer Materialspenderrolle aufgewickelt und zufuhrseitig dem Schneidtisch einer Schneidanlage vorgelagert ist, händisch oder mittels Greifer von der Spenderrolle ab- und auf die Arbeitsfläche des Schneidtisches gezogen, worauf das Schneidaggregat den auf der Arbeitsfläche liegenden Teil von der Spenderrolle abtrennt und, entsprechend programmiert, die Zuschnitte aus dem auf der Arbeitsfläche des sogenannten Vakuumtisches durch die Unterdruckbeaufschlagung festgehaltenen Materialstückes auschneidet. Nach dem Ausschneidevorgang werden dann die Zuschnitte händisch abgenommen und der Abfall beseitigt, worauf neuerlich ein Materialstück von der Spenderrolle abgezogen und aufgelegt wird. Der Schneidvorgang ist somit auf ein vorbestimmtes, der Tischlänge entsprechendes Materialstück und damit auf eine begrenzte Nestlänge beschränkt, was zwangsweise wegen der eingeengten Freiheit in der Nestauslegung große Abfallanteile mit sich bringt und außerdem ein arbeitsintensives und vor allem zeitraubendes Materialzubringen und -abnehmen und Sortieren der Zuschnitte und des Abfalles erfordert. Da es bereits Schneidanlagen gibt, die rationell und weitgehend automatisiert arbeiten, wobei sich mit Ultraschallfrequenz schwingende, exakt auf eine bestimmte Schnittiefe einstellbare Schneidmesser, wie sie beispielsweise aus der GB-A-2148175 hervorgehen, bestens bewährt haben, beeinträchtigt diese Materialhandhabung den ganzen Herstellungsablauf beträchtlich.

Der DE-A-3341651 ist auch schon eine Schneidanlage zu entnehmen, die einen Schneidtisch mit vor und hinter der Arbeitsfläche vorgesehenen Speicherrollen für das Ausgangsmaterial aufweist. Allerdings sind diese Speicherrollen lose drehbar gelagert und das zwischen ihnen über die Arbeitsfläche verlaufende Material muß mittels des verfahrbaren, eigene Greifer tragenden Schneidaggregates zum Ab- und Aufwickeln gezogen werden, wodurch eine Rationalisierung der Materialhandhabung oder der Abfalltrennung nicht möglich ist.

Zur Beschleunigung des Arbeitsablaufes wurde auch schon vorgeschlagen, als Schneidtisch einen Palettentisch zu verwenden, um durch den Einsatz zweier oder mehrerer Paletten das Abnehmen der geschnittenen Zuschnitte und deren Trennung vom Abfall nicht auf der Arbeitsfläche, sondern abseits dieser vornehmen und gewissermaßen parallel zueinander schneiden und sortieren zu können. Diese Beschleunigung des Arbeitsverfahrens muß aber mit einem erhöhten Bau- und Konstruktionsaufwand für den Palettentisch erkauft werden und außerdem läßt sich auch mit dem palettentisch die Nestlänge nicht über die Palettenlänge hinaus vergrößern. Ähnliches gilt für ebenfalls bekannte Conveyortische, die statt austauschbarer Paletten eine aus einem Förderer gebildete Arbeitsfläche aufweisen, so daß nach dem eigentlichen Schnittvorgang die Zuschnitte samt Abfall in einen Sammelbehälter gefördert werden und auch außerhalb des Schneidbereiches von diesem zu trennen sind. Auch hier bleibt die Nestlänge im wesentlichen durch die die Arbeitsfläche bildende Förderstrecke begrenzt und der Förderer bereitet Schwierigkeiten beim Schneidvorgang selbst. Außerdem ist sowohl beim Palettentisch als auch beim Conveyortisch die Unterdruckbeaufschlagung der Arbeitsfläche und damit die Fixierung des Materials beim Schneiden unbefriedigend.

Der Erfindung liegt daher die Aufgabe zugrunde, diese Mängel zu beseitigen und eine Schneidanlage der eingangs geschilderten Art zu schaffen, die auf verhältnismäßig einfache Weise einen besonders rationellen Betrieb erlaubt, das Aufbringen beliebiger Nestlängen ermöglicht, eine weitgehend automatisierbare Materialzu- und -abfuhr ohne jede Behinderung und Beeinträchtigung der Schneid funktionen gewährleistet und noch dazu die Voraussetzungen für eine fortlaufende, selbständige Trennung von Zuschnitten und Abfall bietet.

Die Erfindung löst diese Aufgabe dadurch, daß die Materialspenderrolle mit einer Ablaufbremse ausgerüstet ist und die Materialaufnahmerolle einen in Abhängigkeit von einer die aufgenommene Materiallänge erfassenden Meßeinrichtung schrittweise ansteuerbaren Antrieb aufweist. Ist nach dem Einsetzen einer frischen Spenderrolle das Materialband händisch abgezogen und an der Aufnahmerolle eingespannt, läuft der Schneidbetrieb ohne jedes weitere händische Zutun ab und die Materialzu- und -abfuhr kann exakt auf den Schneidvorgang abgestimmt werden. Trotz des Einsatzes eines einfachen Vakuumtisches ohne bewegte Teile ist durch entsprechendes Auf- bzw. Abwickeln des Materialbandes eine beliebige Nestlänge zu bewältigen, wobei die Schneidbedingungen beim Ausschneiden der einzelnen Zuschnitte durch den schrittweisen Antrieb der Aufnahmerolle unverändert bleiben. Das Materialband wird je nach Bedarf Stuck für Stuck weiterbewegt, so daß das Schneidaggregat im Zusammenwirken mit diesem schrittweisen Weitertransport auch bei begrenzter Arbeitsfläche ein Nest unbegrenzter Länge bearbeiten kann. Nach dem Schnittvorgang läßt sich das Materialband samt Zuschnitten und Abfall auf die Aufnahmerolle aufwickeln, so daß es keine Verzögerung bei der Abnahme der Zuschnitte u.dgl.gibt. Die Aufnahmerolle wird nach dem Aufwickeln einer entsprechenden Bandlänge abgenommen und kann entweder einem eigenen Tisch zur manuellen Entnahme der Zuschnitte oder einem Tisch zur automatischen Abnahme mittels Robotern, einem Kühlschrank zur Zwischenlagerung oder einer Fertigungsstation zur Weiterbehandlung zugeführt werden.

Selbstverständlich setzt das Aufwickeln des Materialbandes voraus, daß Abfall und Zuschnitte auch nach dem Schnittvorgang einen gewissen Zusammenhalt aufweisen, so daß das Schneidaggregat ein Schneidwerkzeug besitzen muß, das ein Schneiden auf Tiefe garantiert. Sind Zuschnitte mit einseitiger Deckfolie zu schneiden, wird das beidseitig folienbedeckte Ausgangsmaterial nur zusammen mit der Oberfolie durchschnitten, so daß die ungeschnittene Unterfolie als Tragschicht das ordnungsgemäße Aufwickeln des auf Tiefe geschnittenen Bandes erlaubt ; sollen hingegen die Zuschnitte beidseitig Deckfolien aufweisen, ist das Ausgangsmaterial daher mit beiden Deckfolien zu durchschneiden, muß meist eine eigene Trägerfolie vorbereitet werden, wozu erfindungsgemäß zwischen der Spenderrolle und dem benachbarten Tischrand eine Zufuhreinrichtung mit einer Zulieferrolle für eine dem Ausgangsmaterial unterlegbare Trägerfolie angeordnet ist. Diese Trägerfolie wird kontinuierlich beim Abziehen des Ausgangsmaterials als Unterlage mitgenommen und sorgt auch nach dem Durchschneiden des Ausgangsmaterials für den zum Aufwickeln auf die Aufnahmerolle erforderlichen Zusammenhalt von Zuschnitten und Abfall. Die Trägerfolie bietet für die Zuschnitte eine gewisse Haftung und darf selbst beim Durchschneiden des Ausgangsmaterials nicht auch durchschnitten werden.

Eine besonders vorteilhafte Ausgestaltung der Erfindung ergibt sich dadurch, daß dem Schneidtisch ein Spenderrollenmagazin für wenigstens zwei wahlweise in eine Abgabestellung bewegbare Spenderrollen vorgeordnet ist, in welcher Abgabestellung jeweils der in einer Klemmeinrichtung eingespannte Anfang des aufgewickelten Materialbandes etwa in Ablaufrichtung zum benachbarten Tischrand hin vorragt, und daß im Bereich dieses vorzugsweise von einer abklappbaren Randklappe gebildeten Tischrandes eine Anschlußstation zum Verbinden des von der Spenderrolle vorragenden Bandanfanges mit einem am Tisch liegenden Bandende vorgesehen ist, wobei die Anschlußstation eine obere und vorzugsweise eine untere Klebebandrolle aufweisen kann, welche Klebebandrollen auf die Bänderstoßstelle aufsetzbar und quer zur Bandlängsrichtung abrollbar sind. Dieses Spenderrollenmagazin erlaubt eine automatische Wahl des Ausgangsmaterials, so daß in einem Arbeitsablauf Zuschnitte aus verschiedenen Ausgangsmaterialien herstellbar sind. Zum Wechseln des Materials wird das Band der sich gerade in der Abgabestellung befindenden Spenderrolle entlang des Schneidtischrandes vom Schneidaggregat abgelängt und das Spenderrollenmagazin bringt die Spenderrolle mit dem gewünschten neuen Material statt der bisherigen Spenderrolle in die Abgabestellung, worauf der Anfang dieses neuen Materialbandes mit dem abgeschnittenen Ende des am Schneidtisch verbliebenen alten Materials verbunden wird, und der übliche Schneidablauf kann fortgesetzt werden. Durch das Verbinden der beiden Materialbänder ist ein neuerliches Einfädeln unnötig und es kommt auch unabhängig von der jeweiligen Materialfolge zu einem gemeinsamen Aufwickeln auf eine Aufnehmerrolle, was Verzögerungen im Schneidbetrieb vermeidet. Zum Verbinden von Anfang und Ende der Bänder kann die Anschlußstation Schweiß- oder Klammereinrichtungen aufweisen, doch in besonders zweckmäßiger Weise besitzt sie eine Klebeeinrichtung mit zumindest einer oberen Klebebandrolle, die für ein Zusammenkleben der jeweils oberen Deckfolien sorgt. Ein besserer Zusammenhalt, der vor allem erforderlich ist, wenn keine zusätzliche Trägerfolie untergelegt wird, ergibt sich durch das Verkleben von oberer und unterer Deckfolie durch ein Klebebandrollenpaar, wobei allerdings zum Ansatz der unteren Klebebandrolle der Schneidtisch eine abklappbare Randklappe aufweist, so daß nach dem Abklappen dieser Klappe die aneinanderstoßenden Bandenden beidseitig für die Klebebandrollen zugänglich sind. Die Klemmeinrichtungen am Spenderrollenmagazin für jede der Spenderrollen sorgen für die Ausrichtung des jeweiligen Bandanfanges und dienen vorzugsweise auch gleichzeitig als Ablaufbremse für die Spenderrolle.

Erfindungsgemäß kann am der Aufnahmerolle benachbarten Tischende ein das Materialband überbrückendes feststehendes Portal vorgesehen sein, das einen Markierungsschlitten mit einem Markierungsgerät zum Kennzeichnen und/oder Beschriften der Zuschnitte und/oder des Abfalles während des Bandvorschubes aufnimmt. Es ist zwar bekannt, Markierungsgeräte mit dem Schneidaggregat zu kombinieren oder ähnlich wie das Schneidaggregat über die Arbeitsfläche verfahrbare Markierungseinrichtungen anzuordnen, doch ergibt sich dabei jeweils ein großer Mehraufwand und das Markieren ist nur bei Bandstillstand möglich. Gibt es hingegen ein festes Portal mit einem in und quer zur Bandlängsrichtung bewegbaren Markierungsschlitten, kann die Beschriftung oder Kennzeichnung einfach und schnell im Anschluß an das Schneiden während des Bandvorschubes erfolgen und es bedarf keiner unerwünschten Stillstandszeiten und Verzögerungen im Arbeitsablauf.

Nach einer besonders vorteilhaften Ausgestaltung der Erfindung ist oberhalb der Aufnahmerolle eine mit einer von oben auf das Materialband aufsetzbaren Umlenkrolle zusammenwirkende Abziehrolle zum Aufwickeln des Schnittabfalles vorgesehen, die einen auf den Antrieb der Aufnahmerolle abstimmbaren Antrieb aufweist, wobei vorzugsweise der Aufnahmerolle eine von unten am Materialband ansetzbare untere Umlenkrolle zugeordnet ist, die in Bandlaufrichtung hinter der oberen Umlenkrolle liegt. Diese Kombination aus Aufnahme- und Abziehrolle eröffnet zusammen mit dem auf Tiefe schneidenen Schneidaggregat die Möglichkeit, Zuschnitte und Abfall automatisch voneinander zu trennen. Es braucht erfindungsgemäß lediglich beim Ausschneiden der Zuschnitte eine Tragschicht, entweder die untere Deckfolie selbst oder die Trägerfolie, ungeschnitten belassen zu werden, worauf einerseits der aus dem zwischen den Zuschnitten verbleibenden Materialstegen od. dgl. mit den zugehörenden Deckfolienteilen bestehende Abfall nach oben abgezogen und auf die Abziehrolle aufgewickelt und anderseits die Trägerschicht mit den Zuschnitten weitergeführt und auf die Aufnahmerolle aufgewickelt wird, und die Abfalltrennung ergibt sich fortlaufend mit dem Bandvorschub. Beim Einfädeln des Materialbandes muß nur die obere Deckfolie mit den ersten Abfallbereichen auf die Abziehrolle gewickelt werden und es kommt zu einem automatischen Abheben und Einziehen des Abfalles während des Wickelvorganges, da beim Hochziehen die zwischen den Zuschnitten verbleibenden Materialstege u.dgl. abgelöst und mitgenommen werden. Auf die Aufnahmerolle gelangt daher nur ein Band aus den Zuschnitten mit den entsprechend geschnittenen oberen Deckfolienstücken und der ungeschnittenen unteren Deckfolie oder Trägerfolie, wobei die untere Umlenkrolle das Abziehen des Abfalles nach oben erleichtert und sicherstellt, daß nicht auch ungewollt Zuschnitte von der Unterfolie bzw. Trägerfolie abgenommen werden. Selbstverständlich muß beim Abziehen des Abfalles für eine synchrone Geschwindigkeit zwischen den auf die Aufnahmerolle und den auf die Abziehrolle aufgewickelten Teilen gesorgt sein, was aber durch entsprechende Meß- und Steuereinrichtungen schwierigkeitslos durchzuführen ist. Außerdem müssen die Nester der Zuschnitte so ausgelegt sein, daß nach dem Schneiden ein zusammenhängender Abfall verbleibt und die Abfallstege oder auch die Randabstände eine Mindestbreite aufweisen, so daß der Abfall ohne Rißgefahr abgezogen und aufgewickelt werden kann. Durch diese automatische Trennung von Abfall und Zuschnitten wird eine wesentliche Rationalisierung des ganzen Arbeitsablaufes nach dem Schneidvorgang möglich.

In der Zeichnung ist der Erfindungsgegenstand beispielsweise rein schematisch veranschaulicht, und zwar zeigen

- Fig. 1 ein auf einer erfindungsgemäßen Schneidanlage bearbeitetes Material im teilgeschnittenen Schaubild,
- Fig. 2 eine erfindungsgemäße Schneidanlage in Seitenansicht,
- Fig. 3 den zufuhrseitigen Teil einer erfindungsgemäßen Schneidanlage mit Spenderrollenmagazin in Seitenansicht und
- Fig. 4 den ablaufseitigen Teil einer erfindungsgemäßen Schneidanlage mit Aufnahme- und Abziehrolle ebenfalls in Seitenansicht.

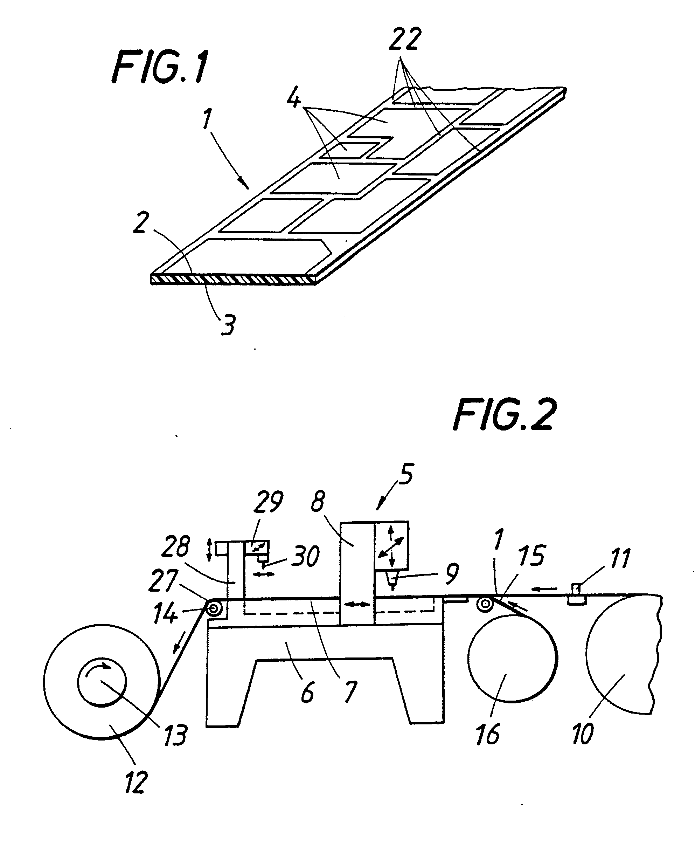

Um aus bandförmigen Ausgangsmaterialien 1, insbesondere Prepregs, die beidseitig mit einer Deckfolie 2, 3 abgedeckt sind, nach einem bestimmten Schnittmuster auf rationelle Weise einzelne Zuschnitte 4 ausschneiden zu können, ist eine Schneidanlage 5 vorgesehen, die einen Schneidtisch 6 mit unterdruckbeaufschlagbarer Arbeitsfläche 7 und ein über die Arbeitsfläche 7 verfahrbares Schneidaggregat 8 aufweist. Das Schneidaggregat 8 besitzt ein mit Ultraschallfrequenz schwingendes Schneidmesser 9, das dem Schneidvorschub entsprechend geführt wird und ein Schneiden auf Tiefe, also ein Schneiden mit exakt einstellbarer Schnittiefe erlaubt. Zur Materialzufuhr ist dem Schneidtisch 6 eine Materialspenderrolle 10 vorgelagert, von der das Bandmaterial 1, durch eine Ablaufbremse 11 gebremst, abgenommen werden kann. Das Bandmaterial 1 wird zu Beginn der Bearbeitung händisch von der Spenderrolle 10 ab- und über die Arbeitsfläche 7 gezogen, bis es auslaufseitig in einer Aufnahmerolle 12 einspannbar ist. Nun läßt sich über den Antrieb 13 der Aufnahmerolle 12 das Bandmaterial 1, dem Schnittvorgang entsprechend, Schritt für Schritt aufwickeln, wobei eine die aufzunehmende Materiallänge erfassende Meßeinrichtung 14 den gewünschten Bandeinzug über die Aufnahmerolle 12 erlaubt. Dadurch ist es möglich, Zuschnitte 4 in beliebiger Nestauslegung aus dem Bandmaterial 1 auszuschneiden und gleichzeitig mit dem Bandvorschub auch die geschnittenen Teile vom Schneidtisch 6 wegzubringen. Nach dem Schneiden wird das Materialband 1 gemäß dem Ausführungsbeispiel nach Fig. 2 zusammen mit den geschnittenen Teilen und dem Abfall auf die Aufnahmetrommel 12 aufgewickelt, so daß nach Abnahme einer solchen Aufnahmetrommel 12 die freie Wahl besteht, wie und wo die Zuschnitte 4 abgenommen werden, ob das Material sofort weiterverarbeitet oder zwischengelagert wird u.dgl.

Da auch nach dem Schneiden zum Aufwickeln ein Zusammenhang der Teile erforderlich ist, muß das Schneidaggregat 8 auf Tiefe schneiden und eine untere, undurchschnittene Folie belassen. Werden daher Zuschnitte mit nur einer Deckfolie benötigt, kann das Schneidaggregat 8 das Ausgangsmaterial 1 zusammen mit der oberen Deckfolie 2 durchschneiden, so daß die untere Deckfolie 3 als Tragschicht verbleibt. Sollen Zuschnitte 4 geschnitten werden, die beidseitig Deckfolien aufweisen, muß auch die untere Deckfolie 3 durchschnitten werden, so daß, um den Zusammenhalt nicht zu verlieren, eine Trägerfolie 15 dem Bandmaterial 1 zu unterlegen ist. Dazu gibt es zwischen Spenderrolle 10 und Schneidtisch 6 eine Zulieferrolle 16 für die Trägerfolie 15, so daß gleichzeitig mit dem Abzug des Bandmaterials 1 die Trägerfolie 15 über die Arbeitsfläche 7 läuft. Nun kann das Ausgangsmaterial zusammen mit der oberen und unteren Deckfolie 2, 3 durchschnitten werden, da die verbleibende Trägerfolie 15 das Aufwickeln des geschnittenen Bandes auf die Aufnahmerolle 12 ermöglicht.

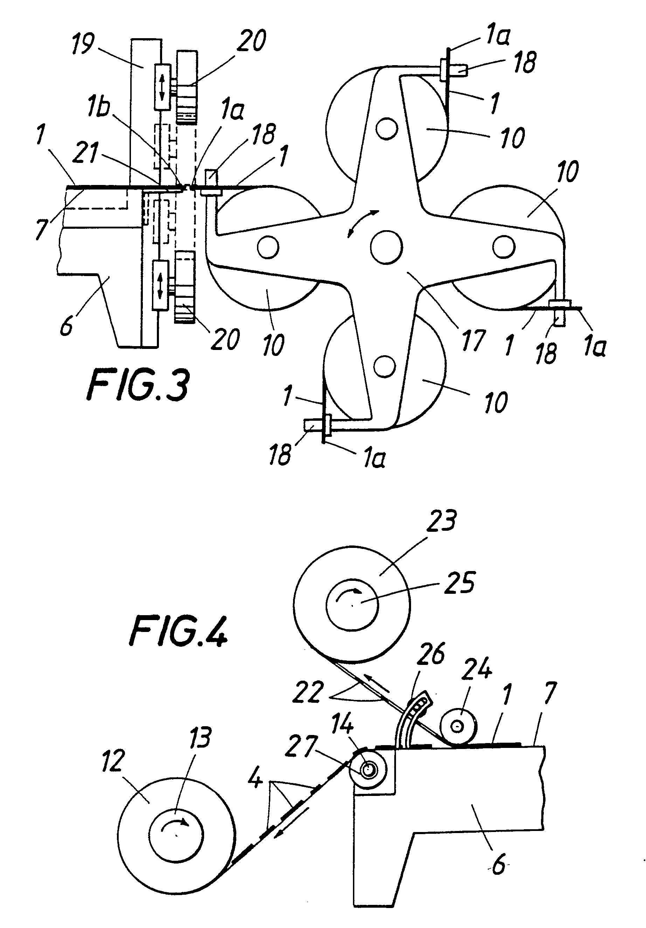

Ist, wie in Fig. 3 angedeutet, dem Schneidtisch 6 ein Spenderrollenmagazin 17 vorgeordnet, können wahlweise verschiedene Spenderrollen 10 und damit verschiedene Materialbänder in Folge geschnitten und weiterverarbeitet werden. Das Spenderrollenmagazin 17 erlaubt es, jede der Spenderrollen 10 in eine Abgabestellung zu bringen, in der eine Klemmeinrichtung 18, beispielsweise eine Klemmleiste, die gleichzeitig auch als Ablaufbremse dient, den Anfang 1a des Materialbandes 1, etwa fluchtend zur Arbeitsfläche 7 vorragend, hält, so daß dieser Anfang 1a mit dem Ende 1b des am Schneidtisch 6 liegenden, zuvor abgelängten Bandes zusammenstößt. Eine Anschlußstation 19 mit zwei Klebebandrollen 20 erlaubt in dieser Lage das Zusammenkleben der Materialbänder, so daß das neue Materialband mit dem vorherigen verbunden und ein Weiterbetrieb des Schneidvorganges sichergestellt ist. Soll ein weiteres Materialband bearbeitet werden, fährt das Schneidaggregat 8 an den zufuhrseitigen Tischrand, durchtrennt hier das Materialband, worauf das Spenderrollenmagazin die gewünschte neue Spenderrolle in die Abgabestellung bringt, in der nun der Bandanfang 1a mit dem gerade abgeschnittenen Ende 1b verbunden werden muß. Dazu kommen wieder die Klebebandrollen 20 zum Einsatz, wobei für den Einsatz einer oberen und unteren Rolle der Schneidtisch 6 eine Randklappe 21 aufweist, die abschwenkbar ist und den Weg für die Klebebandrollen 20 freigibt. Nach dem Zusammenkleben der beiden Materialbänder läuft der Schneidvorgang in üblicher Weise ab, wobei unabhängig von der Materialfolge das Band nach dem Schneidvorgang auf die Aufnahmerolle 12 aufgewickelt wird.

Um nach dem Schneidvorgang den Abfall, also die zwischen den Zuschnitten 4 verbleibenden Zwischen- und Randstege 22 von den Zuschnitten trennen zu können, ist, wie in Fig. 4 veranschaulicht, oberhalb der Aufnahmerolle 12 eine Abziehrolle 23 vorgesehen, die mit einer von oben auf das Materialband 1 aufgesetzten Umlenkrolle 24 am Ende der Arbeitsfläche 7 zusammenwirkt und nach einem händischen Abheben und Einspannen der anfänglichen Abfallbereiche den gesamten Abfall 22 von den Zuschnitten 4 und der unteren Folie automatisch ablöst und aufwickelt. Ist die untere Deckfolie 3 ungeschnitten, bleiben die Zuschnitte 4 auf der unteren Deckfolie 3 liegen und können auf die Aufnahmerolle 12 aufgewickelt werden, ist die untere Deckfolie 3 mitdurchschnitten und eine Trägerfolie 15 vorhanden, bleiben die Zuschnitte 4 auf der Trägerfolie 15 liegen und der Abfall mit Ober- und Unterfolienbereichen wird auf die Abziehrolle 23 aufgewickelt. Selbstverständlich muß für eine gleiche Abziehgeschwindigkeit der auseinandergezogenen Bandteile gesorgt werden, wozu der Antrieb 25 der Abziehrolle 23 über eine die Folienspannung erfassende Pendelrolle 26 od. dgl. Meßeinrichtungen auf den Antrieb 13 der Aufnahmerolle 12 abgestimmt werden kann. Eine der Aufnahmerolle 12 zugeordnete untere Umlenkrolle 27, die in Laufrichtung hinter der oberen Umlenkrolle 24 liegt, erleichtert die Trennung und die Bandführung.

Ist, wie in Fig. 2 angedeutet, am aufnahmerollenseitigen Ende des Schneidtisches 6 ein das Materialband 1 überbrückendes, stehendes Portal 28 vorgesehen, auf dem ein Markierungsschlitten 29 mit einem Markierungsgerät 30 lagert, läßt sich während des Bandvorschubes gleich anschließend an den Schnittvorgang eine Markierung der Zuschnitte 4 oder des Abfalles vornehmen, ohne dazu das Materialband stillhalten zu müssen.

## Patentansprüche

1. Schneidanlage (5) zum Ausschneiden von Zuschnitten aus bandförmigem Ausgangsmaterial (1), insbesondere von ein- oder beidseitig folienbedeckten Prepregs (4), mit einem eine unterdruckbeaufschlagbare Arbeitsfläche (7) bildenden Schneidtisch (6), einem über die Arbeitsfläche (7) verfahrbaren Schneidaggregat (8), das ein auf eine bestimmte Schnittiefe einstellbares Schneidwerkzeug, vorzugsweise ein mit Ultraschallfrequenz schwingendes Schneidmesser (9) besitzt sowie einer dem Schneidtisch (6) materialzufuhrseitig vorgelagerten Materialspenderrolle (10) und einer dem Schneidtisch (6) nachgeordneten Materialaufnahmerolle (12), dadurch gekennzeichnet, daß die Materialspenderrolle (10) mit einer Ablaufbremse (11) ausgerüstet ist und die Materialaufnahmerolle (12) einen in Abhängigkeit von einer die aufgenommene Materiallänge erfassenden Meßeinrichtung (14) schrittweise ansteuerbaren Antrieb (13) aufweist.

2. Schneidanlage nach Anspruch 1, dadurch gekennzeichnet, daß zwischen der Spenderrolle (10) und dem benachbarten Tischrand eine Zufuhreinrichtung mit einer Zulieferrolle (16) für eine dem Ausgangsmaterial (1) unterlegbare Trägerfolie (15) angeordnet ist.

3. Schneidanlage nach Anspruch 1 oder 2, dadurch gekennzeichnet, daß dem Schneidtisch (6) ein Spenderrollenmagazin (17) für wenigstens zwei wahlweise in eine Abgabestellung bewegbare Spenderrollen (10) vorgeordnet ist, in welcher Abgabestellung jeweils der in einer Klemmeinrichtung (18) eingespannte Anfang (1a) des aufgewickelten Materialbandes (1) etwa in Ablaufrichtung zum benachbarten Tischrand hin vorragt, und daß im Bereich dieses vorzugsweise von einer abklappbaren Randklappe (21) gebildeten Tischrandes eine Anschlußstation (19) zum Verbinden des von der Spenderrolle (10) vorragenden Bandanfanges (1a) mit einem am Tisch (6) liegenden Bandende (1b) vorgesehen ist.

4. Schneidanlage nach Anspruch 3, dadurch gekennzeichnet, daß die Anschlußstation (19) eine obere und vorzugsweise eine untere Klebebandrolle (20) aufweist, welche Klebebandrollen (20) auf die Bänderstoßstelle aufsetzbar und quer zur Bandlängsrichtung abrollbar sind.

5. Schneidanlage nach einem der Ansprüche 1 bis 4, dadurch gekennzeichnet, daß am der Aufnahmerolle (12) benachbarten Tischende ein das Materialband (1) überbrückendes feststehendes Portal (28) vorgesehen ist, das einen Markierungsschlitten (29) mit einem Markierungsgerät (30) zum Kennzeichnen und/oder Beschriften der Zuschnitte (4) und/oder des Abfalles (22) während des Bandverschubes aufnimmt.

6. Schneidanlage nach einem der Ansprüche 1 bis 5, dadurch gekennzeichnet, daß oberhalb der Aufnahmerolle (12) eine mit einer von oben auf das Materialband (1) aufsetzbaren Umlenkrolle (24) zusammenwirkende Abziehrolle (23) zum Aufwickeln des Schnittabfalls (22) vorgesehen ist, die einen auf den Antrieb (13) der Aufnahmerolle (12) abstimmbaren Antrieb (25) aufweist.

7. Schneidanlage nach Anspruch 6, dadurch gekennzeichnet, daß der Aufnahmerolle (12) eine von unten am Materialband (1) ansetzbare untere Umlenkrolle (27) zugeordnet ist, die in Bandlaufrichtung hinter der oberen Umlenkrolle (24) liegt.

8. Verfahren zum Trennen der Zuschnitte vom Abfall unter Verwendung einer Schneidanlage nach Anspruch 6 oder 7, dadurch gekennzeichnet, daß das Materialband (1) beim Ausschneiden der Zuschnitte (4) auf Tiefe geschnitten und eine Tragschicht, entweder die untere Deckfolie (3) selbst oder die Trägerfolie (15), ungeschnitten belassen wird, worauf einerseits der aus den zwischen den Zuschnitten (4) verbleibenden Materialstegen od. dgl. -rändern mit den zugehörenden Deckfolienteilen bestehende Abfall (22) nach oben abgezogen und auf die Abziehrolle (23) aufgewickelt und anderseits die Tragschicht mit den daran haftenden, folienbedeckten Zuschnitten (4) weitergeführt und auf die Aufnahmerolle (12) aufgewickelt wird.

## Claims

1. A cutting apparatus (5) for cutting blanks from strip-like stock (1), more particularly prepregs (4) covered with foil on one or both sides, the apparatus comprising : a cutting table (6) effective as a working surface (7) subjected to a negative pressure ; a cutting unit (8) which is movable over the working surface (7) and has a cutting tool, preferably a cutting knife (9) oscillating at ultrasonic frequency, adjustable to a predetermined depth of cut ; a material-dispensing roller (10) preceding the cutting table (6) on the material feed side ; and a material take-up roller (12) disposed after the cutting table (6), characterised in that the material-dispensing roller (10) has a pay-off brake (11) and the material-receiving roller (12) has a drive (13) controllable stepwise in dependence upon measuring means (14) which detect the received length of material.

2. An apparatus according to claim 1, characterised in that feed means having a supply roller (16) for a backing foil (15) adapted to be placed below the stock (1) are disposed between the dispensing roller (10) and the adjacent table edge.

3. An apparatus according to claim 1 or 2, characterised in that a dispensing roller magazine (17) for at least two dispensing rollers (12) movable selectively into a delivery position precedes the cutting table (7), in which delivery position the start (1a) of the coiled material strip (1), such start being clamped in clamping means (18), projects substantially in the pay-off direction towards the adjacent table edge, and near such table edge, which is preferably in the form of a downwardly hingeable end flap (21), a joining station (19) is disposed for joining the strip start (1a) projecting from the dispensing roller (10) to a strip end (1b) disposed on the table (6).

4. An apparatus according to claim 3, characterised in that the joining station (19) has a top and preferably a bottom adhesive tape roller (20), the rollers (20) being adapted to be placed on the betweenstrips junction and being adapted to roll down transversely to strip length.

5. An apparatus according to any one of claims 1 to 4, characterised in that a stationary gantry (28) spanning the material strip (1) is provided at the table end near the material-receiving roller (12) and receives a marking slide (29) associated with a marking unit (30) for marking and/or lettering the blanks (4) and/or the scrap (22) as the strip advances.

6. An apparatus according to any of claims 1 to 5, characterised in that a draw-off roller (23) which cooperates with a deflecting roller (24) adapted to be moved downwardly into engagement with the material strip (21) and which is adapted to wind on the scrap (22) is disposed above the material-receiving roller (12) and has a drive (25) adaptable to the drive (13) of the material-receiving roller (12).

7. An apparatus according to claim 6, characterised in that a bottom deflecting roller (27) movable from below into engagement with the material strip (21) is associated with the material-receiving roller (12) and is disposed after the top deflecting roller (12) as considered in the direction of strip movement.

8. A method of separating the blanks from the scrap with the use of a cutting apparatus according to claim 6 or 7, characterised in that in the cutting-out of the blanks (4) the material strip (1) is cut to depth and a support layer which is either the bottom covering foil (3) itself or the backing foil (15) is left uncut, whereafter the scrap (22) which consists, together with the associated cover foil parts, of the material webs or edges or the like remaining between the blanks (4) is drawn off upwardly and wound on to the draw-off roller (23), while the support layer with the foilcovered blanks (4) sticking to it continues to advance and is wound on to the material-receiving roller (12).

**Revendications**

1. Installation de découpage (5) destinée à découper des flans dans une matière de départ (1) en forme de bande, notamment dans une matière pré-imprégnée (4) revêtue d'une pellicule sur une face ou sur les deux faces, comprenant une table de découpage (6) formant une surface de travail (7) pouvant être soumise à une dépression, un groupe de découpage (8) qu'on peut faire circuler au-dessus de la surface de travail (7), et qui possède un outil de coupe pouvant être réglé sur une certaine profondeur de coupe, de préférence une lame de coupe (9) qui oscille à une fréquence ultrasonore, ainsi qu'un rouleau débiteur de matière (10) placé en amont de la table de découpage (6), sur le côté d'alimentation de la matière, et un rouleau récepteur de matière (12) placé en aval de la table de découpage (6), caractérisée en ce que le rouleau débiteur de matière (10) est équipé d'un frein de déroulement (11) et que le rouleau récepteur de matière (12) présente une commande (13) pouvant être commandé pas-à-pas en fonction d'un dispositif de mesure (14) qui capte la longueur de matière reçue.

2. Installation de découpage selon la revendication 1, caractérisée en ce qu'un dispositif d'amendée possédant un rouleau débiteur (16) qui débite une pellicule porteuse (15) pouvant être placée au-dessous de la matière de départ (1) est disposé entre le rouleau débiteur (10) et le bord adjacent de la table.

3. Installation de découpage selon la revendication 1 ou 2, caractérisée en ce qu'en amont de la table de découpage (6) est disposé un magasin (17) de rouleaux débiteurs destiné à porter au moins deux rouleaux débiteurs (10) qui peuvent être amenés sélectivement dans une position de déroulement, dans laquelle position de déroulement le début (1a) de la bande de matière enroulée (1), qui est serré dans un dispositif de serrage (18), déborde légèrement dans le sens du déroulement, en direction du bord adjacent de la table, et en ce que, dans la région de ce bord de la table, qui est de préférence forme par un volet de bord abattant (21), est prévu un poste de jonction (19) servant à joindre le début (1a) d'une bande qui déborde du rouleau débiteur (10) à une fin de bande (1b) reposant sur la table (6).

4. Installation de découpage selon la revendication 3, caractérisée en ce que le poste de jonction (19) présente un rouleau de ruban adhésif supérieur (20) et de préférence un rouleau de ruban adhésif inférieur (20) lesquels rouleaux de ruban adhésif (20) peuvent être montés sur le poste de jonction des bandes et peuvent se dérouler transversalement à la direction longitudinale des bandes.

5. Installation de découpage selon une des revendications 1 à 4, caracterisée en ce qu'à l'extrémite de la table qui est adjacente au rouleau récepteur (12), est prévu un portique fixe (28) qui forme pont au-dessus de la bande de matière (1), et qui reçoit un chariot de marquage (29) muni d'un appareil de marquage (30) servant à munir les flans (4) et/ou la chute (22) et/ou a les munir d'une inscription pendant l'avance de la bande.

6. Installation de decoupage selon une des revendications 1 à 5, caractérisée en ce qu'au-dessus du rouleau récepteur (12), est prévu un rouleau d'extraction (23) coopérant avec un rouleau de renvoi (24) qui peut êtree appuyé de haut en bas sur la bande de matière (1), ce rouleau d'extraction servant à enrouler la chute de découpage (22), et présentant un dispositif d'entraînement (25) pouvant être synchronisé avec le dispositif d'entraînement (13) du rouleau récepteur (12).

7. Installation de découpage selon la revendication 6, caractérisée en ce que le rouleau récepteur (12) est associé à un rouleau un rouleau de renvoi inférieur (27) zui peut être mis en pression de bas en haut contre la bande de matière (1), et qui est situé en aval du rouleau de renvoi supérieur (24) dans le sens du défilement de la bande.

8. Procédé pour séparer des flans découpés de la chute dans le cas de l'utilisation d'une installation de découpage selon la revendication 6 ou 7, caractérisé en ce que, lors du découpage des flans (4), la bande de matière (1) est découpée à la bonne profondeur et une couche porteuse, qui est, soit la pellicule de revêtement inférieur (3) elle-même, soit la pellicule torteuse (15), est laissée non découpée, alors quoi, d'une part, la chute (22), composée des bandes ou autres bords équivalents de la matière qui subsistent entre les flans (4), avec les parties correspondantes de la pellicule de revêtement, est tirée vers le haut et enroulée sur le rouleau d'extraction (23) tandis que, d'autre part, la couche porteuse, avec les flans (4) adhérents à cette couche et recouverts de la pellicule, est évacuée et enroulée sur le rouleau récepteur (12).

FIG.1
22
4
1
2
3

FIG.2
5
29
8
28
30
1
15
11
27
9
14
6
7
13
16
10
12

19
20
1b
1a
18
1
21
1
7
6
20
10
1a
18
1
10
10
17
1
18
1a
10
1
18
1a
FIG.3
23
25
FIG.4
26
24
22
1
7
14
27
13
12
4
6